# EUROPÄISCHE PATENTSCHRIFT

(11) **EP 2 047 583 B1**
(45) Veröffentlichungstag und Bekanntmachung des Hinweises auf die Patenterteilung: **31.03.2010**
(21) Anmeldenummer: 07788149.8
(22) Anmeldetag: 01.08.2007
(51) Int. Cl.: H02K 3/52, H02K 5/22

(54) **STATOR MIT SCHALTSCHEIBE**
STATOR HAVING A SWITCH DISC
STATOR AVEC DISQUE DE COMMUTATION

(30) Priorität: 04.08.2006 DE 202006012075 U
(43) Veröffentlichungstag der Anmeldung: 15.04.2009
(73) Patentinhaber: ebm-papst Mulfingen GmbH & Co. KG, 74673 Mulfingen (DE)
(72) Erfinder: HOFMANN, Walter, 74673 Mulfingen (DE); STRENG, Gunter, 74575 Schrozberg (DE); POLLOK, Erich, 97996 Niederstetten (DE); HÄFNER, Jochen, 74572 Blaufelden (DE)
(74) Vertreter: Patentanwälte Dr. Solf & Zapf
(86) Internationale Anmeldenummer: PCT/EP2007/057984
(87) Internationale Veröffentlichungsnummer: WO 2008/015246

(56) Entgegenhaltungen:
- EP-A- 0 603 478
- EP-A- 1 024 581
- DE-A1- 4 209 823
- DE-U1- 20 002 869
- DE-U1- 20 212 273

## Beschreibung

Die vorliegende Erfindung betrifft eine Statoranordnung für einen Elektromotor, insbesondere einen Außenläufermotor, gemäß dem Oberbegriff des Patentanspruchs 1.

Eine derartige Statoranordnung ist als Verschaltungsplatte zum Verbinden der Drahtenden einer Statorwicklung aus der Druckschrift EP 0 603 478 B1 bekannt. Auf der als Verschaltungsplatte bezeichneten Schaltscheibe verlaufen aus Blechstanzteilen geformte Leiterbahnen, die in ihrem anschlussseitigen Endbereich als Flachsteckerabschnitte ausgebildet sind, und auf die in tangentialer Bewegungsrichtung Anschlussbuchsen einer Motoranschlussleitung aufgesteckt werden. Die externe elektrische Kontaktierung wird also hier durch ein Steckerbuchsensystem realisiert. Die wicklungsseitigen Endbereiche der Leiterbahnen sind als Anschlussfahnen ausgebildet, die mit den Wicklungsdrahtenden der Statorwicklung verlötet bzw. verschweißt werden.

Eine Anschlusstechnik mittels Schneid-Klemm-Kontakten ist in der Druckschrift DE 202 12 273 offenbart. Dort ist ein durch Umspritzen geformtes, stirnseitig am Stator angeordnetes Isolierelement als Bestandteil einer Verschaltungsanordnung zum direkten Verschalten von Wicklungsdrähten einer Statorwicklung mit einer elektrischen Anschlussleitung beschrieben, wobei in Schneidklemmtechnik ausgeführte Kontaktelemente zum Kontaktieren der Wicklungsdrähte mit der Anschlussleitung in dem Isolierelement gehaltert sind. Durch einen Steck-Füge-Vorgang eines Aufnahmegehäuses auf das Isolierelement wird mittels der Schneid-Klemm-Wirkung der Schneid-Klemm-Kontakte eine direkte elektrische Verbindung zwischen den Wicklungsdrähten und der Anschlussleitung hergestellt.

In der EP 1 126 580 ist eine Steckerverbindung für die elektrischen Anschlüsse von Statorwicklungen beschrieben. Die Anordnung weist eine Schaltscheibe als Bestandteil einer Anschlusseinheit auf, die Kontaktierung zwischen Anschlussleitung und Statorwicklungen erfolgt als Steckverbindung mittels Flachsteckern und Steckverbinderelementen. Die Anschlussleitung ist also direkt mittels Flachsteckern mit den Kontaktelementen des Stators verbunden.

Die genannten Anschlussvorrichtungen weisen jedoch Nachteile auf. So ist in der in der EP 0 603 478 B1 offenbarten technischen Lehre eine spezielle Vorrichtung notwendig, um in einem separaten Arbeitsschritt die Wicklungsdrahtenden mit den Anschlussfahnen zu verlöten bzw. zu verschweißen.

Ebenso mit Nachteilen behaftet ist die Ausführung in Schneidklemmtechnik aus der DE 202 12 273 U1. Durch die direkte Kontaktierung der internen Wicklungsdrähte mit der von außen herangeführten Anschlussleitung ist eine individuelle Verschaltung der Wicklungdrahtenden nicht möglich.

Auch die Druckschrift EP 1 126 580 B1 offenbart wenig Flexibilität hinsichtlich der Anschlusskonfiguration. Durch die Leitungsführung des Anschlusskabels auf der Schaltscheibe sind die zu verbindenden Kontakte des Stators fest verdrahtet. Zudem erhöhen die vorgesehenen Flachsteckerverbindungen die Komplexität des Produkts.

Das Dokument EP 1 024 581 A2 beschreibt eine weitere Möglichkeit zur Kontaktierung von Motorwicklungen eines Elektromotors, wobei aber keine Schaltscheibe mit Leiterbahnen im eigentlichen Sinne vorgesehen ist. Vielmehr ragen die Enden der Motorspulen zu einer Seite heraus und durchstoßen Ausnehmungen in einem dort "Kammerblockkappe" genannten Kontaktträger aus Kunststoff. Die Spulen-Anschlussdrähte verlaufen in Führungen des Kontäktträgers, wobei sie paarweise zur Bildung von Sputen-Paaren durch einen aufgesteckten Schneid-Klemm-Kontakt elektrisch und mechanisch miteinander verbunden sind. Zudem sind je zwei benachbarte Spulen über weitere drei Schneid-Klemm-Kontakte untereinander zu einer Dreieckschaltung verbunden. Somit handelt es sich um eine direkte Wicklungsverschaltung ohne zusätzliche Leiterbahnen einer Schaltscheibe.

Der vorliegenden Erfindung liegt die Aufgabe zu Grunde, eine Statoranordnung der eingangs beschriebenen Art zu entwickeln, durch die eine Vereinfachung des Fertigungsprozesses und der Motorendmontage erzielt werden kann.

Diese Aufgabe wird erfindungsgemäß durch die Merkmale des unabhängigen Anspruchs 1 gelöst. Bevorzugte Ausgestaltungen der Erfindung sind in den abhängigen Ansprüchen definiert.

Die Verwendung der Schneid-Klemm-Technik zur Kontaktierung der wicklungsseitigen Kontaktabschnitte der Leiterbahnen erspart den aufwändigen Fertigungsschritt des Verlötens bzw. Verschweißens der Wicklungsenden an Anschlussfahnen.

In erfindungsgemäßer Ausgestaltung weist der Stator eine Kunststoffumspritzung auf, an der umfänglich verteilt in axiale Richtung zur Schaltscheibe weisende Aufnahmetaschen angeformt sind, in die Kontaktelemente der Schneid-Klemm-Kontakte einsetzbar sind, welche mit ihren der Schaltscheibe abgewandten Kontaktbereichen die Wicklungsenden kontaktieren. Durch die Integration der Schneid-Klemm-Kontakte in die Kunststoffumspritzung des Stators, kann dieser soweit vorkonfektioniert werden, dass die Kontakte der Wicklungsenden an den Schneidklemmen zum Abgriff zur Verfügung stehen. Die Bewicklung und die Prüfung der Bewicklung kann vollautomatisiert erfolgen.

Zur Kontaktierung der Schneidklemmen weist die Schaltscheibe in ihrem äußeren Randbereich umfänglich verteilt angeordnete Durchbrechungen auf, in die wicklungsseitige Kontaktabschnitte der Leiterbahnen radial hineinragen. Die Durchbrechungen sind bei auf den Stator aufgesetzter Schaltscheibe von den Aufnahmetaschen des Stators durchgriffen. Hierbei verlaufen die wicklungsseitigen Kontaktabschnitte der Leiterbahnen in den Durchbrechungen radial und sind hochkant ausgerichtet, so dass sie axial in die der Schaltscheibe zugewandten Kontaktbereiche der Kontaktelemente der Schneid-Klemm-Kontakte einführbar sind. Diese Konstruktion ermöglicht einen vereinfachten Fertigungsprozess, bei dem weitgehend vorkonfigurierte Baugruppen nur noch mittels Steck- und Rastverbindungen axial zusammengefügt werden; die Schaltscheibe kann automatisch aufgesetzt werden. Neben einem Kostenvorteil durch Bauteilreduktion entsteht dadurch ein erheblicher Zeitvorteil.

Weitere vorteilhafte Ausführungen der Erfindung werden an Hand eines bevorzugten, in den Zeichnungen veranschaulichten Ausführungsbeispiels näher erläutert. Dabei zeigen:
- Fig. 1: eine erfindungsgemäße Statoranordnung mit Statorbuchse,
- Fig. 2: eine erfindungsgemäße Schaltscheibe mit Leiterbahnen und Deckplatte,
- Fig. 3: die Schaltscheibe gemäß Fig. 2 mit eingesetzten Leiterbahnen und der Deckplatte und
- Fig. 4: einen erfindungsgemäßen Außenläufermotor mit Steckerelement.

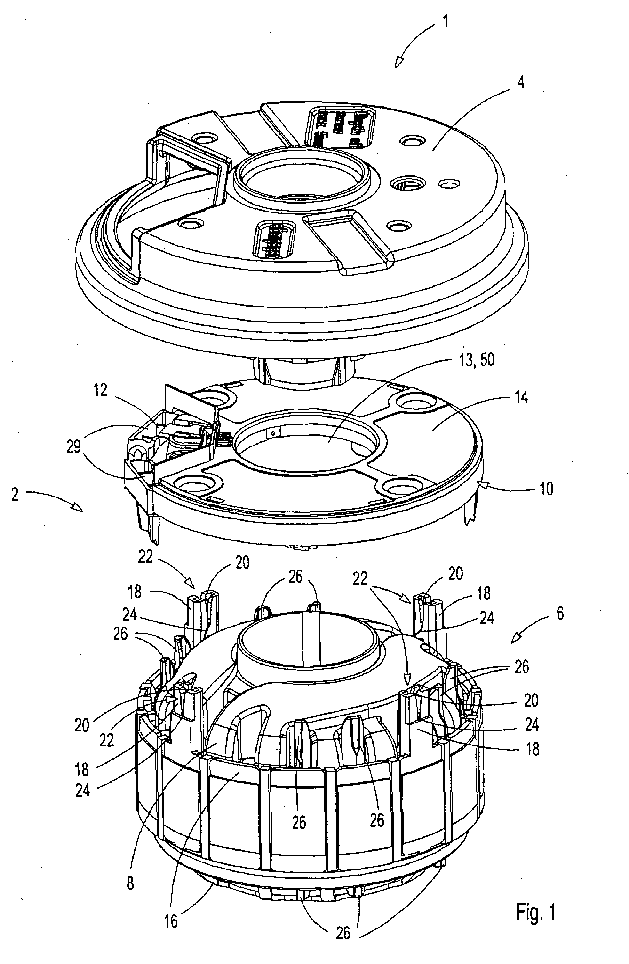

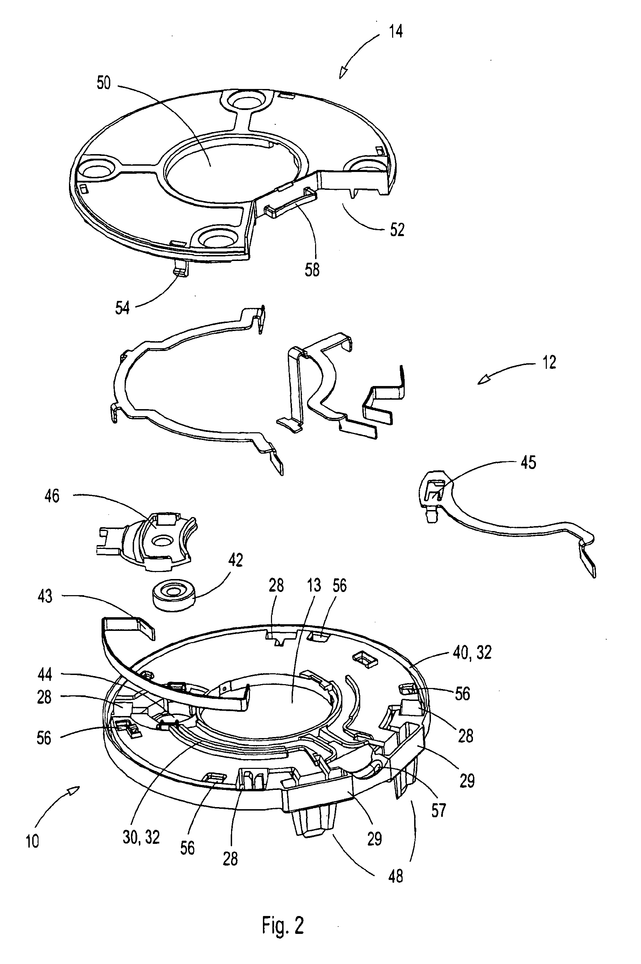

Fig. 1 zeigt eine perspektivische Darstellung einer erfindungsgemäßen Statoranordnung 2 zusammen mit einer Statorbuchse 4 für einen Außenläufermotor 1. Die Statoranordnung 2 besteht aus einem Stator 6 mit Statorwicklungen 8 und einer Schaltscheibe 10, in die Leiterbahnen 12 eingesetzt sind, siehe Fig. 2, und die mit einer Deckplatte 14 verschlossen ist. Zur Motorendmontage wird die mit der Deckplatte 14 verschlossene Schaltscheibe 10 stirnseitig auf den bewickelten Stator 6 aufgedrückt und anschließend die Statorbuchse 4 aufgesetzt.

Der Stator 6 ist von einer Kunststoffumspritzung 16 umgeben, an der umfänglich verteilt in axiale Richtung zur Schaltscheibe 10 weisende Aufnahmetaschen 18 angeformt sind. In dem dargestellten Ausführungsbeispiel sind vier um 90 ° versetzte Aufnahmetaschen 18 zu erkennen. In die Aufnahmetaschen 18 sind Kontaktelemente 20 eingesetzt, die die Schneid-Klemm-Kontakte 22 bilden und die mit ihren der Schaltscheibe 10 abgewandten Kontaktbereichen (durch die Aufnahmetaschen größtenteils verdeckt) die Wicklungsenden 24 der Statorwicklung 8 kontaktieren.

Zwischen den Aufnahmetaschen 18 dienen axial angeformte Führungszapfen 26 während der Bewicklung des Stators zur Umlenkung des Wicklungsdrahtes und bestimmen die geometrische Anordnung der Wicklung. Korrespondierende Führungszapfen 26 sind an der der Schaltscheibe 10 abgewandten Seite des Stators 6 angebracht.

Fig. 2 zeigt die Schaltscheibe 10 mit Leiterbahnen 12 und der Deckplatte 14 im Detail. Die Schaltscheibe 10 ist kreisförmig ausgebildet und weist eine konzentrische Öffnung 13 zur Aufnahme eines Stirnisolationsschafts des Stators 6 auf. Die Schaltscheibe 10 besitzt in der dargestellten Ausführung in ihrem äußeren Randbereich vier umfänglich äquidistant verteilt angeordnete Durchbrechungen 28, die bei auf den Stator 6 aufgesetzter Schaltscheibe 10 von den Aufnahmetaschen 18 des Stators 6 durchgriffen werden. Die Aufnahmetaschen 18 schließen dabei in etwa bündig mit der den Stator 6 abgewandten Oberseite der Schaltscheibe 10 ab.

Des Weiteren weist die Schaltscheibe 10 auf der dem Stator 6 abgewandten Seite an ihrem äußeren Rand Kontaktkammern 29 auf, die vorliegend als zwei Doppelkammem ausgebildet sind, und in die an einem Steckerelement 34 befindliche externe Schneid-Klemm-Kontakte 38 zum Verbinden einer Anschlussleitung 36 eingesetzt werden können. Zwischen den beiden Doppelkammern ist der Randbereich der Schaltscheibe 10 entlang des Umfangs von einer länglichen Rastarmöffnung 57 zur Aufnahme eines Rastarms des Steckerelements 34 durchbrochen.

Auf der dem Stator 6 abgewandten Seite weist die Schaltscheibe 10 durch Randstege 30 abgegrenzte Leiterbahnführungen 32 auf, die im Wesentlichen in Umfangsrichtung, in ihren Endbereichen aber meist radial verlaufen. Ebenfalls auf der dem Stator 6 abgewandten Seite weist die Schaltscheibe 10 entlang des äußeren Randes über einen Winkelbereich von ca. 300 ° eine Nut 40 auf, die abschnittsweise als Leiterbahnführung 32 dient.

In die aus den Randstegen 30 und aus der Nut 40 geformten Leiterbahnführungen 32 können die Leiterbahnen 12 eingesetzt werden. Die Leiterbahnen 12 stellen die elektrische Verbindung zwischen den Wicklungsenden 24 und den extemen Anschlüssen der Anschlussleitung 36 dar, wobei unterschiedliche Verschaltungsmöglichkeiten, z. B. für Rechts-/Linkslauf realisiert werden können, die sich in einer unterschiedlichen "Streckenführung" der Leiterbahnen 12 äußern. Vorzugsweise sind die Leiterbahnen 12 als einstückige Stanzbiegeteile ausgeführt. Die Leiterbahnen 12 sind mit ihren jeweiligen Endabschnitten in den Durchbrechungen 28 sowie in den Kontaktkammern 29 hochkant ausgerichtet, so dass sie von den internen Schneid-Klemm-Kontakten 22 und von den extemen Schneid-Klemm-Kontakten 38 bei Aufstecken in axialer Richtung erfasst werden.

Zur Aufnahme eines knopfförmigen Temperaturüberwachungselements 42 ist in der Schaltscheibe 10 auf der dem Stator 6 abgewandten Seite eine weitere kreisförmige Kammer 44 eingelassen, die mit einem aufclipbaren Deckel 46 verschließbar ist. Das Temperaturüberwachungselement 42 ist in der Kammer 44 durch Leiterbahnendabschnitte, die als Federbügel 43, 45 ausgebildet sind, seitlich und an seiner Deckfläche kontaktiert.

Auf der dem Stator 6 zugewandten Seite weist die Schaltscheibe 10 an ihrem äußeren Umfang in dem gezeigten Ausführungsbeispiel drei axiale Stützstege 48 auf, die sich auf dem äußeren Rand der Kunststoffumspritzung 16 des Stators 6 abstützen. Zwei dieser Stützstege sind axial gegenüberliegend der Kontaktkammern 29 angeordnet, um dem Druck beim Aufsetzen der extemen Schneid-Klemm-Kontakte 38 des Steckerelements 34 entgegenzuwirken.

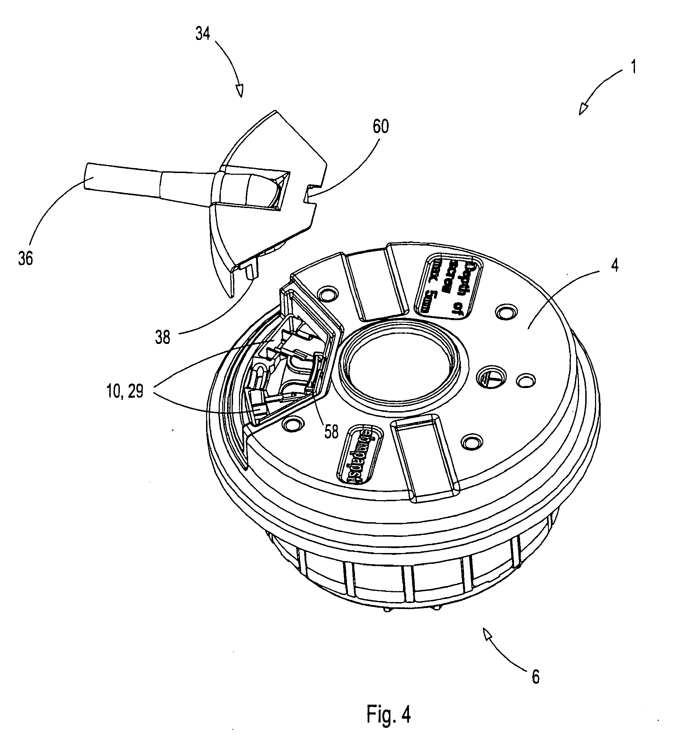

Die Schaltscheibe 10 kann mit der Deckplatte 14 verschlossen werden. Wie die Schaltscheibe 10 weist auch die Deckplatte 14 eine konzentrische Aufnahmeöffnung 50 zur Aufnahme des Stirnisolationsschafts des Stators 6 auf. Eine kreissegmentförmige Aussparung 52 in der Deckplatte 14 gewährleistet, dass die anschlussseitigen, hochkantig ausgerichteten Endbereiche der Leiterbahnen 12 in den Kontaktkammern 29 zum Aufstecken des Steckerelements 34 axial zugänglich sind. Zum Verrasten des Steckerelements 34 weist die Deckplatte 14 am Rand der kreissegmentförmigen Aussparung 52 eine radial nach außen weisende bügelförmige Halterung 58 auf, die von einem Rastarm 60 des Steckerelements 34 (siehe Fig. 4) hintergriffen wird. Die Deckplatte 14 besitzt an ihrem äußeren Rand umfänglich verteilt angeordnete Rastarme 54, die in entsprechende Rastarmöffnungen 56 der Schaltscheibe 10 eingreifen.

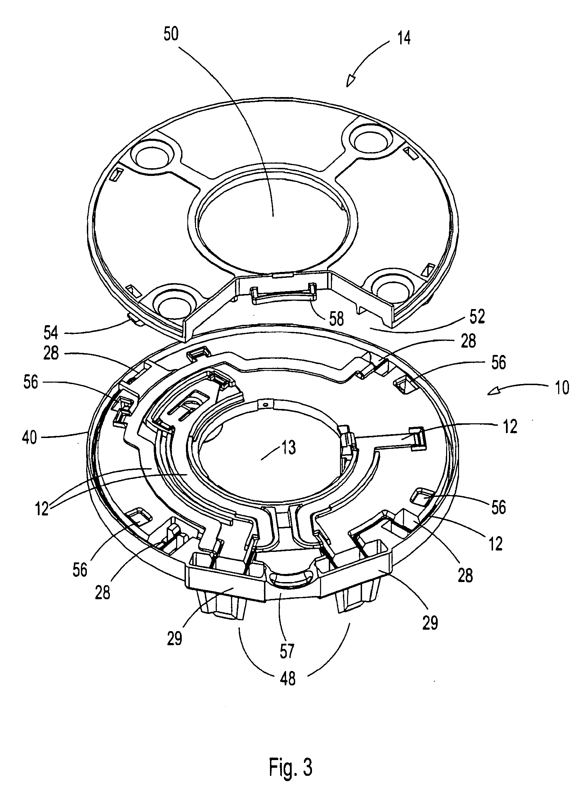

Fig. 3 zeigt die Schaltscheibe 10 mit eingesetzten Leiterbahnen 12. Durch Verrasten der Deckplatte 14 mit der Schaltscheibe 10 entsteht eine vorkonfigurierbare Einheit, die in einfacher Weise auf den Stator 6 aufgesetzt werden kann. Dabei ragen die an der Kunststoffumspritzung 16 des Stators 6 angeformten Aufnahmetaschen 18 durch die Durchbrechungen 28 der Schaltscheibe 10. Die Kontaktelemente 20 der Schneid-Klemm-Kontakte 22 umgreifen die in den Durchbrechungen 28 hochkant ausgerichteten Leiterbahnen 12.

Zugleich wird die Schaltscheibe 10 durch die Schneid-Klemm-Kontakte 22 an dem Stator 6 lagefixiert, d. h. neben der elektrischen Verbindung zu den Wicklungsenden 24 haben die Schneid-Klemm-Kontakte 22 auch die Funktion der mechanischen Halterung der Schaltscheibe 10.

Fig. 4 zeigt den zusammengesetzten Außenläufermotor, auf den nur noch das Steckerelement 34 aufzusetzen ist. Dieses kann in der Endmontage mit einem Handgriff axial aufgedrückt werden. Zwischen Stator 6 und Statorbuchse 4 sind die in die Schaltscheibe 10 eingelassenen Kontaktkammern 29 für die Anschlussleitung 36 zu erkennen. Die an dem Steckerelement 34 ausgebildeten extemen Schneid-Klemm-Kontakte 38 umgreifen beim Aufsetzen des Steckerelements 34 die hochkant ausgerichteten anschlussseitigen Endbereiche der Leiterbahnen 12.

## Patentansprüche

1. Statoranordnung (2) für einen Elektromotor, insbesondere einen Außenläufermotor (1), bestehend aus einem Stator (6) mit Statorwicklungen (8) und einer senkrecht zur Motorachse an dem Stator (6) angeordneten Schaltscheibe (10) mit Leiterbahnen (12), die Wicklungsenden (24) der Statorwicklung (8) kontaktieren und mit einer Anschlussleitung (36) verbindbar sind,
**dadurch gekennzeichnet, dass** der Stator (6) eine Kunststoffumspritzung (16) aufweist, an der umfänglich verteilt in axiale Richtung zur Schaltscheibe (10) weisende Aufnahmetaschen (18) angeformt sind, in die Kontaktelemente (20) von Schneid-Klemm-Kontakten (22) einsetzbar sind, wobei die Schneid-Klemm-Koritakte (22) mit ihren der Schaltscheibe (10) abgewandten Kontaktbereichen die Wicklungsenden (24) der Statorwicklungen (8) kontaktieren und mit wicklungsseitigen Kontaktabschnitten der auf der Schaltscheibe (10) angeordneten Leiterbahnen (12) verbinden, wobei die Schaltscheibe (10) in ihrem äußeren Randbereich umfänglich verteilt angeordnete Durchbrechungen (28) aufweiset, in welche die Wicklungsseitigen Kontaktabschnitte der Leiterbahnen (12) radial hineinragen und die bei auf den Stator (6) aufgesetzter Schaltscheibe (10) von den Aufnahmetaschen (18) des Stators (6) durchgriffen sind, und wobei die wicklungsseitigen Kontaktabschnitte der Leiterbahnen (12) in den Durchbrechungen (28) radial verlaufen und hochkant ausgerichtet sind, so dass sie axial in die der Schaltscheibe (10) zugewandten Kontaktbereiche der Kontaktelemente (20) der Schneid-Ktemm-Kontakte (22) einführbar sind.

2. Statoranordnung nach Anspruch 1,
**dadurch gekennzeichnet, dass** dieSchaltscheibe(10)aufder dem Stator (6) abgewandten Seite durch Randstege (30) abgegrenzte Leiterbahnführungen (32) aufweist, die in .Umfangsrichtung und insbesondere in ihren Endabschnitten auch in radialer Richtung verlaufen.

3. Statoranordnung nach Anspruch 1 oder 2,
**dadurch gekennzeichnet, dass** dieSchaltscheibe(10)aufder dem Stator (6) abgewandten Seite an ihrem äußeren Rand über einen Winkelbereich von ca. 300° eine Nut aufweist, die abschnittsweise als Leiterbahnführung (32) dient.

4. Statoranordnung nach einem der Ansprüche 1 bis 3,
**dadurch gekennzeichnet, dass** dieSchaltscheibe(10)aufder dem Stator (6) abgewandten Seite an ihrem äußeren Rand Kontaktkammern (29) aufweist, in welchen anschlussseitige Kontaktabschnitte der Leiterbahnen (12) radial geführt sind.

5. Statoranordnung nach einem der Ansprüche 1 bis 4,
**dadurch gekennzeichnet, dass** die Schaltscheibe (10) auf ihrer dem Stator (6) zugewandten Seite an ihrem äußeren Rand axiale Stützstege (48) aufweist, die sich auf dem äußeren Rand der Kunststoffumspritzung (16) des Stators (10) abstützen und insbesondere gegenüberliegend der Kontaktkammern (29) angeordnet sind.

6. Statoranordnung nach einem der Ansprüche 1 bis 5,
**dadurch gekennzeichnet, dass** die Schaltscheibe (10) durch die wicklungsseitigen Schneid-Klemm-Kontakte (22) auf dem Stator (6) lagefixiert wird.

7. Statoranordnung nach einem der Ansprüche 1 bis 6,
**dadurch gekennzeichnet, dass** dieSchaltscheibe(10)aufder dem Stator (6) abgewandten Seite mit einer Deckplatte (14) versehen ist, die mit zur Schaltscheibe (10) hin angeformten Rastarmen (54) ausgestattet ist.

8. Statoranordnung nach Anspruch 7,
**dadurch gekennzeichnet, dass** die Schaltscheibe (10) in ihrem äußeren Randbereich umfänglich verteilt angeordnete Rastarmöffnungen (56) besitzt, die bei aufgesetzter Deckplatte (14) von deren Rastarmen (54) hintergriffen sind.

9. Statoranordnung nach einem der Ansprüche 4 bis 8,
**dadurch gekennzeichnet, dass** die Schaltscheibe (10) zwischen den Kontaktkammern (29) eine Rastarmöffnung (22) in ihrem äußeren Randbereich zur Verrastung eines aufsetzbaren, mit Rastarmen (60) versehenen Steckerelements (34) besitzt.

10. Statoranordnung nach einem der Ansprüche 1 bis 9,
**dadurch gekennzeichnet, dass** in die Schaltscheibe (10) auf ihrer dem Stator (6) abgewandten Seite zur Aufnahme eines Temperaturüberwachungselements eine Kammer (44) eingelassen ist, die mit einem aufclipbaren Deckel (46) verschließbar ist.

11. Statoranordnung nach einem der Ansprüche 1 bis 10,
**dadurch gekennzeichnet, dass** die Schaltscheibe (10) kreisförmig ausgebildet ist und eine konzentrische Öffnung (13) zur Aufnahme eines Stirnisolationsschafts des Stators (6) aufweist.

12. Statoranordnung nach einem der Ansprüche 7 bis 11,
**dadurch gekennzeichnet, dass** die Deckplatte (14) eine konzentrische Aufnahmeöffnung (50) und eine kreissegmentförmige Aussparung (52) aufweist, so dass die Kontaktkammern (29) axial zugänglich sind.

13. Statoranordnung nach einem der Ansprüche 9 bis 12,
**dadurch gekennzeichnet, dass** dieDeckplatte(14)eine bügelförmige Halterung (58) zur Aufnahme eines Rastarmes (60) des Steckerelements (34) aufweist.

14. Statoranordnung nach einem der Ansprüche 1 bis 13,
**dadurch gekennzeichnet, dass** die Leiterbahnen (12) als einstückige Stanzbiegeteile ausgebildet sind.

15. Statoranordnung nach einem der Ansprüche 12 bis 17,
**dadurch gekennzeichnet, dass** auf die Deckplatte (14) der Schaltscheibe (10) eine Statorbuchse (4) aufsetzbar ist, die eine kreissegmentförmige Aussparung aufweist, die in aufgesetztem Zustand mit der kreissegmentförmigen Aussparung (52) der Deckplatte (14) fluchtet, so dass das Steckerelement (34) axial einsetzbar ist und mit den Rastarmen (60) in der Rastarmöffnung (57) der Schaltscheibe (10) und der bügelförmigen Halterung (58) der Deckplatte verrastbar ist.

16. Statoranordnung nach einem der Ansprüche 9 bis 15,
**gekennzeichnet durch** das Steckerelement (34) an der Anschlussleitung (36) vormontierbar ist und externe Schneid-Klemm-Kontakte (38) aufweist, die die Anschlussleitung (36) kontaktieren, wobei das Steckerelement (34) parallel zur Statorachse auf die Schaltscheibe (10) derart aufsteckbar ist, dass die externen Schneid-Klemm-Kontakte (38) anschlussseitige Kontaktabschnitte der Leiterbahnen (12) kontaktieren.

## Claims

1. A stator arrangement (2) for an electric motor, in particular an external rotor motor (1), consisting of a stator (6) with stator windings (8) and a switch disc (10), arranged on the stator at right-angles to the motor axis, with conductive tracks (12) which contact winding ends (24) of the stator winding (8) and can be connected to a connecting line (36),
**characterised in that** the stator (6) has an injection-moulded plastic surround (16) on which receiving pockets (18) facing in the axial direction towards the switch disc (10) are formed, distributed peripherally, into which contact elements (20) of insulation displacement contacts (22) can be inserted, the insulation displacement contacts (22) contacting the winding ends (24) of the stator windings (8) with their contact regions which are remote from the switch disc (10) and connecting them to winding-side contact sections of the conductive tracks (12) arranged on the switch disc (10), the switch disc (10) having in its outer edge region peripherally distributed through holes (28) into which the winding-side contact sections of the conductive tracks (12) project radially and which, when the switch disc (10) is placed on the stator (6), are penetrated through by the receiving pockets (18) of the stator (6), and the winding-side contact sections of the conductive tracks (12) extending radially in the through holes (28) and being oriented upright, so that they can be introduced axially into the contact regions, facing the switch disc (10), of the contact elements (20) of the insulation displacement contacts (22).

2. A stator arrangement according to Claim 1,
**characterised in that** the switch disc (10) on the side remote from the stator (6) has conductor tracking (32) defined by edge lands (30), which tracking in the peripheral direction and in particular in its end sections also extends in the radial direction.

3. A stator arrangement according to Claim 1 or 2,
**characterised in that** the switch disc (10) on the side remote from the stator (6), on its outer edge, has over an angular range of approx. 300° a groove which serves in sections as conductor tracking (32).

4. A stator arrangement according to one of Claims 1 to 3,
**characterised in that** the switch disc (10) on the side remote from the stator (6), on its outer edge, has contact chambers (29) in which connection-side contact sections of the conductive tracks (12) are radially guided.

5. A stator arrangement according to one of Claims 1 to 4,
**characterised in that** the switch disc (10) on its side facing the stator (6) has on its outer edge axial supporting lands (48) which are supported on the outer edge of the injection-moulded plastic surround (16) of the stator (10) and in particular are arranged opposite the contact chambers (29).

6. A stator arrangement according to one of Claims 1 to 5,
**characterised in that** the switch disc (10) is fixed in position on the stator (6) by the winding-side insulation displacement contacts (22).

7. A stator arrangement according to one of Claims 1 to 6,
**characterised in that** the switch disc (10) on the side remote from the stator (6) is provided with a cover plate (14) which is equipped with latch arms (54) formed-on towards the switch disc (10).

8. A stator arrangement according to Claim 7,
**characterised in that** the switch disc (10) in its outer edge region has peripherally distributed latch-arm openings (56) behind which, when the cover plate (14) is placed on top, the latch arms (54) thereof engage.

9. A stator arrangement according to one of Claims 4 to 8,
**characterised in that** the switch disc (10), between the contact chambers (29), has a latch-arm opening (22) in its outer edge region for engaging a connector element (34), provided with latch arms (60), which can be placed on top.

10. A stator arrangement according to one of Claims 1 to 9,
**characterised in that** a chamber (44) is formed in the switch disc (10) on its side remote from the stator (6) for receiving a temperature-monitoring element, which chamber can be closed with a clip-on cover (46).

11. A stator arrangement according to one of Claims 1 to 10,
**characterised in that** the switch disc (10) is made circular and has a concentric opening (13) for receiving an end insulating shaft of the stator (6).

12. A stator arrangement according to one of Claims 7 to 11,
**characterised in that** the cover plate (14) has a concentric receiving opening (50) and a cutout (52) in the form of a segment of a circle, so that the contact chambers (29) are axially accessible.

13. A stator arrangement according to one of Claims 9 to 12,
**characterised in that** the cover plate (14) has a stirrup-shaped holding means (58) for receiving a latch arm (60) of the connector element (34).

14. A stator arrangement according to one of Claims 1 to 13,
**characterised in that** the conductive tracks (12) are formed as one-piece punch-bent parts.

15. A stator arrangement according to one of Claims 12 to 17,
**characterised in that** a stator bush (4) can be placed on the cover plate (14) of the switch disc (10), which bush has a cutout in the form of a segment of a circle, which when the bush is placed on is flush with the cutout (52) in the form of a segment of a circle of the cover plate (14), so that the connector element (34) can be inserted axially and can be engaged with the latch arms (60) in the latch-arm opening (57) of the switch disc (10) and the stirrup-shaped holding means (58) of the cover plate.

16. A stator arrangement according to one of Claims 9 to 15,
**characterised by** [sic] the connector element (34) can be premounted on the connecting line (36) and has external insulation displacement contacts (38) which contact the connecting line (36), the connector element (34) being able to be pushed on to the switch disc (10) parallel to the stator axis such that the external insulation displacement contacts (38) contact connection-side contact sections of the conductive tracks (12).

## Revendications

1. Système de stator (2) pour un moteur électrique, en particulier un moteur à induit extérieur (1), formé par un stator (6) avec des enroulements de stator (8) et un disque de commutation (10), disposé perpendiculairement à l'axe du moteur sur le stator (6) et muni de bandes conductrices (12) qui contactent les extrémités (24) des enroulements de stator (8) et qui peuvent être reliées à une ligne de raccordement (36),
**caractérisé en ce que** le stator (6) comporte une enveloppe (16) en matière plastique moulée par injection, sur laquelle sont formées des poches de réception (18), qui sont réparties sur le pourtour et sont orientées dans la direction axiale vers le disque de commutation (10) et dans lesquelles peuvent être enfichés des éléments de contact (20) de contacts à borne guillotine (22), lesdits contacts à borne guillotine (22) contactant, avec leurs zones de contact opposées au disque de commutation (10), les extrémités (24) des enroulements de stator (8) et les reliant à des tronçons de contact, du côté enroulement, des pistes conductrices (12) agencées sur le disque de commutation (10), ledit disque de commutation (10) comportant, dans sa zone de bordure extérieure, des passages (28) répartis sur le pourtour, dans lesquels s'engagent radialement les tronçons de contact, du côté enroulement, des pistes conductrices (12) et à travers lesquels passent les poches de réception (18) du stator (6) lorsque le disque de commutation (10) est posé sur le stator (6), et les tronçons de contact, du côté enroulement, des pistes conductrices (12) s'étendant radialement dans les passages (28) et étant orientés verticalement, de telle sorte qu'ils peuvent être introduits axialement dans les zones de contact, orientées vers le disque de commutation (10), des éléments de contact (20) des contacts à borne guillotine (22).

2. Système de stator selon la revendication 1,
**caractérisé en ce que** le disque de commutation (10), sur la face opposée au stator (6), comporte des guidages (32) pour pistes conductrices, délimités par des nervures latérales (30), qui s'étendant dans la direction circonférentielle et en particulier aussi dans la direction radiale au niveau de leurs extrémités.

3. Système de stator selon la revendication 1 ou 2,
**caractérisé en ce que** le disque de commutation (10), sur la face opposée au stator (6), comporte sur son bord extérieur sur une zone angulaire de 300° environ une rainure qui, par zones, fait fonction de guidage (32) pour les pistes conductrices.

4. Système de stator selon l'une quelconque des revendications 1 à 3,
**caractérisé en ce que** le disque de commutation (10), sur la face opposée au stator (6), comporte, sur son bord extérieur, des chambres de contact (29), dans lesquelles sont guidés radialement des tronçons de contact, du côté connexion, des pistes conductrices (12).

5. Système de stator selon l'une quelconque des revendications 1 à 4,
**caractérisé en ce que** le disque de commutation (10), sur sa face orientée vers le stator (6), comporte, sur son bord extérieur, des nervures de support (48) axiales, qui prennent appui sur le bord extérieur de l'enveloppe (16) en matière plastique du stator (6) et sont agencées en particulier en face des chambres de contact (29).

6. Système de stator selon l'une quelconque des revendications 1 à 5,
**caractérisé en ce que** le disque de commutation (10) est immobilisé en position sur le stator (6) par les contacts à borne guillotine (22) du côté enroulement.

7. Système de stator selon l'une quelconque des revendications 1 à 6,
**caractérisé en ce que** le disque de commutation (10), sur la face opposée au stator (6), est muni d'une plaque de recouvrement (14), qui est dotée de bras de blocage (54) formés sur celle-ci en étant orientés vers le disque de commutation (10).

8. Système de stator selon la revendication 7,
**caractérisé en ce que** le disque de commutation (10), sur sa zone de bordure extérieure, comporte des orifices (56) pour bras de blocage, répartis sur le pourtour, dans lesquels s'engagent les bras de blocage (54) lorsque la plaque de recouvrement (14) est posée.

9. Système de stator selon l'une quelconque des revendications 4 à 8,
**caractérisé en ce que** le disque de commutation (10) comporte entre les chambres de contact (29), dans sa zone de bordure extérieure, un orifice (22) pour bras de blocage pour bloquer un connecteur à fiches (34) muni de bras de blocage (60) et apte à être posé.

10. Système de stator selon l'une quelconque des revendications 1 à 9,
**caractérisé en ce que** dans le disque de commutation (10), sur sa face opposée au stator (6), est ménagée une chambre (44), qui est destinée à recevoir un élément de surveillance de température et qui peut être fermée par un couvercle (46) encliquetable.

11. Système de stator selon l'une quelconque des revendications 1 à 10,
**caractérisé en ce que** le disque de commutation (10) est réalisé avec une forme circulaire et comporte une ouverture (13) concentrique destinée à recevoir une tige d'isolation frontale du stator (6).

12. Système de stator selon l'une quelconque des revendications 7 à 11,
**caractérisé en ce que** la plaque de recouvrement (14) comporte une ouverture de réception (50) concentrique et un évidement (52) en forme de segment de cercle, de telle sorte que les chambres de contact (29) sont accessibles axialement.

13. Système de stator selon l'une quelconque des revendications 9 à 12,
**caractérisé en ce que** la plaque de recouvrement (14) comporte une fixation (58) en forme d'étrier destinée à recevoir un bras de blocage (60) du connecteur à fiches (34).

14. Système de stator selon l'une quelconque des revendications 1 à 13,
**caractérisé en ce que** les pistes conductrices (12) sont réalisées sous la forme d'éléments pliés découpés d'un seul tenant.

15. Système de stator selon l'une quelconque des revendications 12 à 17,
**caractérisé en ce que** sur la plaque de recouvrement (14) du disque de commutation (10) peut être posée une douille (4), qui comporte un évidement en forme de segment de cercle qui, dans la position montée, est aligné avec l'évidement (52) en forme de segment de cercle de la plaque de recouvrement (14), de telle sorte que le connecteur à fiches (34) peut être mis en place axialement et peut être bloqué avec les bras de blocage (60) dans l'ouverture (57) du disque de commutation (10) et dans la fixation (58) en forme d'étrier de la plaque de recouvrement.

16. Système de stator selon l'une quelconque des revendications 9 à 15,
**caractérisé en ce que** le connecteur à fiches (34) peut être pré-assemblé à la ligne de raccordement (36) et comporte des contacts à borne guillotine (38) externes, qui contactent la ligne de raccordement (36), ledit connecteur à fiches (34) pouvant être enfiché parallèlement à l'axe du stator sur le disque de commutation (10), de telle sorte que les contacts à borne guillotine (38) externes contactent les tronçons de contact, du côté connexion, des pistes conductrices (12).
